# EUROPEAN PATENT APPLICATION

(11) **EP 1 738 651 A1**
(43) Date of publication of application: **03.01.2007**
(21) Application number: 06253338.5
(22) Date of filing: 27.06.2006
(51) Int. Cl.: A23C 11/10

(54) **Using reduced fat soy particulates to produce soymilk with a reduced fat content**

(30) Priority: 27.06.2005 US 169121
(71) Applicant: Morningstar Services Inc., Wilmington, Delaware 19801 (US)
(72) Inventor: Salmen, Armin, Erie, Colorado 80516 (US); Cai, David Tiande, Superior, Colorado 80027 (US); Hou, Home-Jer, Superior, Colorado 80027 (US)
(74) Representative: Lawrence, John

(57) **Abstract**

A method for the production of soymilk having a reduced fat content includes dispersing soy particulates (100), which have a reduced fat content, in a liquid to produce a dispersion. The dispersion is heat-treated (104) to produce a soymilk having a reduced fat content.

To be accompanied, when published, by Figure 2 of the drawings.

## Description

### TECHNICAL FIELD

This invention relates generally to the field of manufacturing soymilk and more specifically to a system and method using reduced fat soy particulates to produce soymilk with a reduced fat content.

### BACKGROUND

Soymilk has proven to be a popular beverage with health conscious consumers who desire to reduce the risk of developing heart disease and cancer. Soymilk is also popular among consumers that are lactose intolerant or allergic to milk protein. Soymilk manufacturers tend to fall within two sectors: those that use a natural process to produce "natural" or "organic" soymilk from whole soybeans and those that use a less natural process to produce soymilk from isolated soy protein (also called soy isolate). Using the latter process, a soybean extract is produced by breaking down the soybean to isolate the soy protein. Because the described process includes solvent extraction to remove residual fat, the Federal Food and Drug Administration prohibits the labeling of soymilks produced from soy isolate as "organic."

Light soymilks typically include those that have less than fifty percent of the fat content of their more fattening counterparts and/or those that exhibit a thirty-three percent reduction in calories. Thus, to qualify for a "light" label, the light variety of soymilk produced by a manufacturer must have fifty percent less fat or thirty-three percent fewer calories than that same manufacturer's regular variety. Because isolated soy protein is virtually fat free, the production of "light" soymilk from soy protein isolate requires only that the manufacturer reduces the amount of oil that is added to the isolated soy protein. It is more difficult, however, to reduce the fat content of "natural" or "organic" soymilk made from whole soybeans. Nevertheless, customers who seek to reap the health benefits of soymilk while reducing their caloric or fat intake desire a soymilk that may be considered both "natural" or "organic" and "light."

### SUMMARY OF THE DISCLOSURE

In accordance with a particular embodiment of the present invention, a method for the production of soymilk having a reduced fat content includes dispersing soy particulates, which have a reduced fat content, in a liquid to produce a dispersion. The dispersion is heat treated to produce a soymilk having a reduced fat content.

Particular embodiments of the invention may provide one or more technical advantages. A technical advantage of particular embodiments may be that a light soymilk having a reduced fat content may be produced without organic solvents. Because reduced fat soy particulates are used, the fat content of soymilk may be reduced by at least fifty percent in some embodiments. Furthermore, because the soymilk is produced from raw materials that include soybeans, the finished product may be marketed as both "low-fat" or "light" and certified as "organic" in accordance with Federal Food and Drug Administration regulations. As an additional benefit, consumers of the finished product may take advantage of the health benefits of reduced fat soymilk. For example, consumers may reduce their cholesterol and, as a result, their risk of heart disease.

Another technical advantage of particular embodiments may be that the reduced fat soy particulates may be used in conjunction with soymilk production systems that are typically used to produce soymilk from whole soy beans. Accordingly, manufacturers may produce "low-fat" or "light" soymilk using the same soymilk production systems used to produce "regular" soymilk.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a production system that uses reduced fat soy particulates for the production of soymilk having a reduced fat content according to a particular embodiment; and
FIGURE 2 is a method using reduced fat soy particulates for the production of soymilk having a reduced fat content according to a particular embodiment.

### DETAILED DESCRIPTION OF THE DRAWINGS

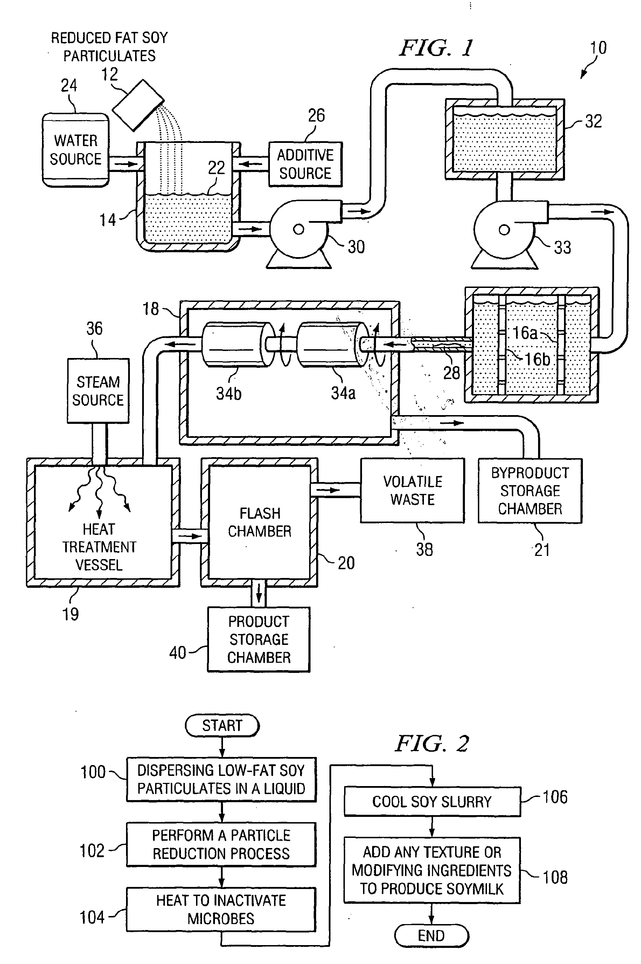

Embodiments of the present invention and its advantages are best understood by referring to FIGURES 1 through 2 of the drawings, like numerals being used for like and corresponding parts of the various drawings. Although terms such as "reduced fat", "low-fat", and "light" may be used in this document to describe the soymilk produced using the methods and systems described herein and such terms may be defined in federal regulations, such as 21 C.F.R. § 101, this document is not intended to be limited by such definitions. Rather, the terms "reduced fat", "low-fat", and "light" are used interchangeably to described soymilk that is produced using the methods and systems described herein.

FIGURE 1 illustrates a production system 10 that uses reduced fat soy particulates 12 for the production of soymilk having a reduced fat content. Reduced fat soy particulates, as a natural product of soybeans, may be used as a raw material in the place of whole soybeans in the production of organic soymilk with a reduced fat content. Because the reduced fat soy particulates are a natural product of soybeans and is produced through a natural aqueous extraction process, the resulting soymilk may be considered both "natural" or "organic" and "light." Furthermore, because the reduced fat soy particulates may be used in conjunction with soymilk production systems that use whole soybeans to produce soymilk, manufacturers may produce "light" soymilk using the same soymilk production systems used to produce "regular" soymilk. Specifically, reduced fat soy particulates 12 may be used in conjunction with some combination of a dispersion vessel 14, a mill 16, a decanter 18, a heat treatment vessel 19, and a vacuum chamber 20 to produce soymilk that may be labeled "light" and certified as "organic" in accordance with Federal Food and Drug Administration regulations. Additionally, customers may receive the perceived and real health benefits of a more natural product.

As described above, reduced fat soy particulates 12 form the raw material from which the light soymilk is produced using production system 10. In various embodiments, reduced fat soy particulates 12 may include a powder, flakey substance, or other particular solid. For example, the reduced fat soy particulates 12 may comprise a commodity product that is commercially available from a variety of sources including Natural Products, Inc., US Soy LLC, and Kerry, Inc. Typically soy particulates that include 97 % of particles passing through a 100 mesh (0.147 mm) standard screen is termed "soy flour." Conversely, soy particulates that include particles passing through a 10 mesh (2 mm) standard screen, but retaining on a 100 mesh (0.147 mm) standard screen is termed "soy grits." For purposes of this document, however, "reduced fat soy particulates 12" is used generically to refer to reduced or low-fat soy meal, reduced or low-fat soy flour, reduced or low-fat soy grits, reduced or low-fat soy granules, and partially defatted soy meal, flour, grits, or granules. The particle size may be on the order of 0.03 mm to 30 mm.

In particular embodiments, reduced fat soy particulates 12 may be produced through a process that may include dehulling whole soybeans. The dehulled soybeans may then be crushed using an extruder and/or pressed using an expeller or screw press to mechanically reduce the fat content of the soybeans. Specifically, the extruder and screw press may be used to remove a portion of the oil that is naturally found in whole soybeans. In particular embodiments, supercritical carbon dioxide may be used in conjunction with the extruder and/or expeller to extract the oil from the soybeans. Finally, the resulting press cake is milled using a roller mill, hammer mill, pin mill, or other suitable mill to produce the end product, which comprises reduced fat soy particulates 12.

Reduced fat soy particulates 12 are a rich source of protein, isoflavones, and iron and may also be a good source of riboflavin, pantothenic acid, and folic acid. In particular embodiments, reduced fat soy particulates 12 may have a specific protein functionality that results in the reduced fat soy particulates 12 having a composition that includes approximately 45 to 60 percent protein and 3 to 15 percent fat (on a moisture-free basis). Additionally, reduced fat soy particulates 12 may have a 15 to 80 percent protein dispersibility index, which indicates the solubility and dispersibility of the protein of reduced fat soy particulates 12.

Other parameters may also be maintained in the production of reduced fat soy particulates 12. For example, processing temperatures during the extruding and/or fat reduction steps described above may be maintained within a desirable range to minimize the amount of friction-generated heat damage caused to protein compounds. Damage to soy protein caused by excess heat may result in soy protein that is not soluble and, thus, not functional in the finished beverage. To reduce damage to soy protein, the soybean materials used to produce reduced fat soy particulates 12 may be maintained at temperatures on the order of 40 to 150 °C, in particular embodiments. In addition to improving solubility, minimizing the damage to the soy protein in the reduced fat soy particulates 12 also minimizes discoloration and, thus, results in a more marketable soymilk produced from reduced fat soy particulates 12.

The particle size of reduced fat soy particulates 12 may also be maintained within specific parameters to improve the solubility of the reduced fat soy particulates 12 during the soymilk production phase. Generally, if the particles are too fine, the reduced fat soy particulates 12 will tend to form lumps and float. Conversely, if the particles are too big, it becomes difficult to extract the protein from the reduced fat soy particulates 12 for the production of soymilk. Accordingly, in particular embodiments, the particle size of the reduced fat soy particulates 12 may be on the order of 0.03 mm to 30 mm. Thus, approximately 80 percent of the particles within reduced fat soy particulates 12 may pass through a US Standard 4 mesh or screen. It is generally recognized, however, that the provided particle sizes are merely example ranges of acceptable particle sizes for soy particulates that may be used in the production of soymilk. As will be described in more detail below, the particle size may be optimized to reduce the number of steps that are performed and the system components used during the soymilk production phase.

As described above, the reduced fat soy particulates 12 are used in an aqueous extraction process for the production of low-fat, "natural" soymilk. In the illustrated embodiment, the aqueous extraction process begins when the reduced fat soy particulates 12 are dispersed with cold or hot water in a dispersion vessel 14. Because the reduced fat soy particulates 12 are not actually soluble within the technical meaning of the word, a dispersion 22 is created with the reduced fat soy particulates 12 using mixing or agitation. Accordingly, in particular embodiments, dispersion vessel 14 may include a propeller mixer, a high shear mixer, or other mixer suitable for creating aqueous dispersion 22 of reduced fat soy particulates 12. In other embodiments, dispersion vessel 14 may include an agitator. The finer the particle size of the reduced fat soy particulates 12, the more high-speed mixing or extreme agitation needed to result in an even distribution of reduced fat soy particulates 12 within dispersion 22. Conversely, the coarser the particle size of the reduced fat soy particulates, the less mixing or agitation required to prevent the reduced fat soy particulates 12 from forming lumps in dispersion 22.

Water is added to dispersion vessel 14 from a water source 24. Depending on the flavor of the soymilk desired, the water added from water source 24 may be hot water or cold water. Typically, hot water may be used in production system 10 when a less beany flavor is desired, which is appropriate when the soymilk is marketed in western markets. A beany flavor is a result of enzymatic activity in the mixture of reduced fat soy particulates and water, particularly for reduced fat soy particulates that are produced at low extrusion and expelling temperatures. Hot water, however, may operate to inactivate the enzymes that cause the beany flavor. To provide partial or total inactivation of the beany enzymes, the water added by water source 24 may be of a temperature on the order of 50 to 100° C and may, in particular embodiments, be of a temperature on the order of 60 to 85° C. Although higher temperatures are desired to inactivate the enzymes that cause the beany flavor, temperatures that exceed 75 ° C may result in the protein compounds being denatured. As a result, the protein compounds may be insoluble in the water in dispersion vessel 14.

In particular embodiments, a processing aid or additive may be added to dispersion 22 from an additive source 26. The processing aid or additive may operate to increase the solubility of the reduced fat soy particulates 12. For example, an additive such as sodium bicarbonate, which increases the pH of dispersion 22, may be added to dispersion 22. An increase in pH within dispersion 22 may result in increased solubility or dispersibility of the protein within dispersion 22. Accordingly, the processing aid, such as sodium bicarbonate, may be added to dispersion 22 to achieve a desired additive to bean ratio that results in a desired pH within dispersion 22. For example, in particular embodiments, the additive to soy particulate ratio may include a ratio from 1:100 to 1:600.

The objective of dispersing the reduced fat soy particulates 12 in dispersion vessel 14 is to obtain an even distribution of reduced fat soy particulates 12 in the aqueous liquid. In particular embodiments, a dispersion on the order of 1:5 to 1:18 (ratio of reduced fat soy particulates to water) is desired. A failure to obtain an even distribution of reduced fat soy particulates to water may result in excessive lumping of the reduced fat soy particulates 12. Specifically, because the water in dispersion vessel 14 is not able to reach the interior of a lump of reduced fat soy particulates 12, the protein compounds in the reduced fat soy particulates 12 may be less efficiently extracted. In contrast, a high yield of the beneficial protein compounds within the reduced fat soy particulates 12 is the ultimate objective of the aqueous extraction process performed by production system 10.

The dispersion 22 is pumped from dispersion vessel 14 to a hopper 32 or another vessel or container using pump 30. In the illustrated embodiment, hopper 32 is coupled to one or more mills 16 or other grinders that are used to reduce the size of the particles in dispersion 22 and to further disintegrate any residual lumps that are present in dispersion 22. In particular embodiments, dispersion 22 is forced through small openings in one or more mills 16 using pump 33. The milling process is a wet process that produces high shear forces to disintegrate lumps and reduce particle size. Accordingly, the milling process performed by mill(s) 16 improves the protein extraction yield that is obtained from dispersion 22. Although two mills 16a and 16b are illustrated, it is recognized that any appropriate mechanism may be used to disintegrate lumps and reduce particle size within dispersion 22.

In particular embodiments, the milling process performed by mill(s) 16 may render a slurry 28 that may be transported to decanter 18. Decanter 18 includes one or more large centrifuges 34 with moving barrels that are used to rid slurry 28 of large particles. In the illustrated embodiment, decanter 18 includes two horizontal centrifuges 34a and 34b. Centrifuges 34 include barrel compartments that are spun about a central axis to separate colloidal particles in slurry 28. Where two centrifuges 34 are used in decanter 18, each centrifuge may be designed to remove particles of a particular specific gravity and, thus, of a particular size.

Although decanter 18 is illustrated and described as including centrifuges 34, it is recognized that decanter 18 may include any appropriate mechanism for removing large particles within slurry 28. Furthermore, it is recognized that decanter 18 is optional and may be omitted from production system 10. Nevertheless, the removal of large particles in decanter 18, although optional, may result in a finished product having improved sensory qualities. For example, the soymilk may be less gritty and considered more palatable to consumers. Additionally, decanting slurry 28 may also remove visible particles that customers might find unpleasing to the eye. It is recognized, however, that the removal of particles by decanter 18 reduces production yields associated with production system 10. Accordingly, decanter 18 may be designed, in particular embodiments, to remove large particles while maintaining the solids yield at a desired level. The removed particles and other residues from decanter 18 are pumped into byproduct storage chamber 21.

After the decanting process, slurry 28 may be pumped into a heat treatment vessel 19. In heat treatment vessel 19, slurry 28 may undergo heat treatment or heat processing that operates to pasteurize and/or sterilize slurry 28. In particular embodiments, slurry 28 may be heated to an ultra high temperature to inactivate a substantial number of spoilage microbes in slurry 28. For example, slurry 28 may be heated to a temperature on the order of 70 to 145° C and, in particular embodiments, to a temperature on the order of 135 to 145° C. The heating of slurry 28 may be effected by super-heated steam that is injected directly into the slurry 28 from a steam source 36. In particular embodiments, steam source 36 may include a very fine spray that instantaneously or substantially instantaneously increases the temperature of slurry 28 to provide for the pasteurization and/or sterilization of slurry 28.

Although steam injection is described above, other heating systems may be used in place of steam source 36 to heat slurry 28 in heat treatment vessel 19. For example, an indirect heat exchanger may be used to heat slurry 28 such that the steam does not come into direct contact with slurry 28. As other examples, a plate heat exchanger, a tube-in-tube heat exchanger, a scraped-surface heat exchanger, an electrical heater, or a microwave could be used to heat slurry 28. As still another example, Ohmic heating could be used to send a current through slurry 28 to quickly increase the temperature of slurry 28 within heat treatment vessel 19.

After the heating of slurry 28 in heat treatment vessel 19, slurry 28 may be cooled in flash chamber 20. In particular embodiments, the flash cooling of slurry 28 may include using a vacuum process that operates to deodorize slurry 28. For example, the slurry 28 may be cooled to a temperature on the order of 55 to 85° C and, in particular embodiments, to a temperature on the order of 65 to 80° C. Benefits of the deodorization of slurry 28 may include the removal of flavor volatiles and aroma compounds that result in a beany flavor. As an additional benefit, the flash cooling of slurry 28 may result in the removal of condensate that was added to slurry 28 during the direct steam injection heating process described above. As byproducts of production system 10, the flavor volatiles, aroma compounds, and condensate removed by the flash cooling of slurry 28 may be removed from flash chamber 20 through volatile waste purge 38 and disposed of. Volatile waste purge 38 may incorporate a vacuum suction system to remove the unwanted byproducts.

Although flash cooling is described above, other cooling systems may be used in place of a flash chamber to cool slurry 28. For example, a plate heat exchanger, a tube-in-tube heat exchanger, a scraped-surface heat exchanger, or an electrical cooler could be used to cool slurry 28. As still another example, slurry 28 could be allowed to cool to room temperature on its own.

As described above, heat treatment vessel 19 and flash chamber 20 operate to pasteurize and deodorize, respectively, slurry 28. Although both of these processes are optional, the result of the heat treatment processes performed in heat treatment vessel 19 is a microbiologically safer finished product. Additionally, the result of the cooling process performed in flash chamber 20 is a cleaner flavor. Where the heating and cooling processes are continuous and near instantaneous, the processes are gentle to slurry 28 to maximize nutrient and flavor retention within slurry 28. In particular embodiments, for example, slurry 28 is held at a maximum temperature of approximately 135 to 145 °C for 2 to 10 seconds. Slurry 28 may then be immediately flash cooled to a temperature between 65 to 80°C.

After processing in flash chamber 20, the resulting soy extract (which may also be called a soy base) is removed from flash chamber 20 and may be pumped to a heat exchanger (not illustrated) to further cool the product. Although optional, a heat exchanger may be used to quickly cool the product to a sufficiently low temperature to preserve its quality. Upon cooling, the soy extract may then be pumped to a product storage tank 40. Product storage tank 40 may operate to refrigerate the soy extract until the soy extract is moved to a different storage facility and/or until it is used to produce a finished product that may be marketed as soymilk. In particular embodiments, product storage tank 40 may be a jacketed tank that uses a cooling medium to cool the soy extract to a temperature on the order of 1 to 10° C. One such cooling medium that may be utilized by product storage tank 40 is glycol. It is recognized, however, that other cooling mediums such as ammonia, and cold water may also be appropriate for cooling the soy extract to the desired temperature.

At some point before the marketing of the finished product, various ingredients may be added to the soy extract to produce the finished soymilk product. In particular embodiments, these ingredients may include flavor or texture modifying ingredients such as water, sweeteners, stabilizers, flavors, or some combination thereof. The additional ingredient(s) may improve the taste or palatability of the finished soymilk product. The soymilk may be subjected to a heat treatment to extend the shelf life of the product.

It is generally recognized that production system 10 is merely one example embodiment of a system for producing soymilk from reduced fat soy particulates. Accordingly, alterations or permutations such as modifications, additions, or omissions may be made to production system 10 without departing from the scope of the invention. For example, in particular embodiments, the production system may not include a dispersion vessel 14. Instead, reduced fat soy particulates 12 may be distributed directly into hopper 32 using a screw conveyer or other apparatus suitable for conveying reduced fat soy particulates 12. In such an embodiment, hopper 32 may operate as a dispersion vessel. Such an embodiment may be used when reduced fat soy particulates 12 are of a coarser consistency because lumps are less likely to form with a coarser material. For example, dispersion vessel 14 may be omitted from production system 10 when more than 70% of soy particulates are retained on a 30 mesh screen. Where soy particulates 12 include smaller particles, however, hopper 32 may include an agitator or mixer to create the desired dispersion 22.

As an additional or alternative modification, the decanting process performed by decanter 18 could be omitted. As stated above, the removal of decanter 18 from production system 10 may improve the production yield of soy extract. However, it is recognized that the finished product might include large particles that result in a reduced quality product. For example, soymilk produced without the decanting process may have a gritty texture that is not popular with some consumers or groups of consumers. This resulting gritty texture, however, may be compensated for to some extent by improving the milling process performed by mill(s) 16. For example, where slurry 28 is milled to a finer particle size, the gritty texture exhibited by the finished product may be reduced or minimized. Alternatively, rather than omit the decanting process altogether, decanter 18 might include only one centrifuge 34 for removing large particles.

As still another modification that may be made to production system 10, the cooling process performed by flash chamber 20 may be omitted. As described above, the cooling process is primarily used to remove flavor volatiles and aroma compounds that result in a beany flavor. Where a beany flavor is desirable, however, flash cooling slurry 28 may be unnecessary. Additionally or alternatively, it may not be necessary in some embodiments to cool slurry 28 in product storage chamber 40. Instead, if production system 10 or another related system includes equipment for immediately or nearly-immediately adding the finishing ingredients to the soy extract to produce the finished product, storage of the soy extract may be unnecessary.

FIGURE 2 illustrates a method for the production of soymilk using reduced fat soy particulates according to a particular embodiment. The method begins at step 100 where reduced fat soy particulates 12 are dispersed in a liquid to produce a dispersion 22. In particular embodiments, the soy particulates 12 used to produce the dispersion 22 may have a reduced fat content that is on the order of 3 to 15 percent on a moisture-free basis. To reduce beany flavors, the liquid in which the reduced fat soy particulates are dispersed may include water of a temperature on the order of 50 to 100 °C. In particular embodiments, the dispersion may be produced in a dispersion vessel 14 that uses mixing or agitation to evenly distribute the soy particulates throughout the dispersion. In other embodiments, the dispersion may be produced in a hopper 32 with or without a mixer or agitator.

At step 102, a particle reduction process may be performed on dispersion 22 to remove particles that are larger than a threshold particle size. In particular embodiments, the particle reduction process may include milling dispersion 22 using shear forces appropriate to disintegrate lumps and particles in dispersion 22 to produce slurry 28. Additionally or alternatively, the particle reduction process may include using one or more centrifuges to remove large particles having a particular specific gravity.

At step 104, slurry 28 may be heated to inactivate microbes present in slurry 28. The microbes removed may include microbes that are naturally occurring in reduced fat soy particulates 12. In particular embodiments, slurry 28 may be heated using direct steam injection. Thus, the steam may be sprayed directly into slurry 28. It is recognized, however, that slurry 28 may be heated using any of the above described heating elements or any other heating element suitable for heating a vessel containing an aqueous solution. After heating slurry 28, slurry 28 may be cooled at step 106. The cooling process may operate to remove any volatile compounds in slurry 28. Specifically, the flash cooling process may remove odors and flavors to improve the palatability of the finished product.

At step 108, any texture or flavor-modifying ingredients may be added to slurry 28 to produce soymilk having a reduced fat content. As described above with regard to FIGURE 1, texture or flavor-modifying ingredients may include water, sweeteners, flavors, stabilizers, or any combination thereof. After adding the ingredients, a heat treatment as described previously may be used to produce a more shelf stable soymilk product.

Some of the steps illustrated in FIGURE 2 may be combined, modified or deleted where appropriate, and additional steps may also be added to the flowchart. Additionally, steps may be performed in any suitable order without departing from the scope of the invention.

Particular embodiments of the invention may provide one or more technical advantages. A technical advantage of particular embodiments may be that a light soymilk having a reduced fat content may be produced using a process without organic solvents. Because reduced fat soy particulates are used, the fat content of soymilk may be reduced by at least fifty percent in some embodiments. Furthermore, because the soymilk is produced from raw materials that include soybeans, the finished product may be marketed as both "low-fat" or "light" and certified as "organic" in accordance with Federal Food and Drug Administration regulations. As an additional benefit, consumers of the finished product may take advantage of the health benefits of reduced fat soymilk. For example, consumers may reduce their cholesterol and, as a result, their risk of heart disease.

Another technical advantage of particular embodiments may be that the reduced fat soy particulates may be used in conjunction with soymilk production systems that are typically used to produce soymilk from whole soybeans. Accordingly, manufacturers may produce "low-fat" or "light" soymilk using the same soymilk production systems used to produce "regular" soymilk.

While this disclosure has been described in terms of certain embodiments and generally associated methods, alterations and permutations of the embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An aqueous extraction process for the production of soymilk having a reduced fat content, comprises:
dispersing soy particulates in a liquid to produce a dispersion, the soy particulates having a reduced fat content;
performing a particle size reduction process on the dispersion to produce a soy slurry;
heating the soy slurry to inactivate one or more microbes or enzymes present in the soy slurry; and
cooling the soy slurry to remove volatile compounds.

2. An aqueous extraction process for the production of soymilk having a reduced fat content, comprises:
dispersing soy particulates in a liquid to produce a dispersion, the soy particulates having a reduced fat content; and
heat treating the dispersion to produce a soymilk having a reduced fat content.

3. The aqueous extraction process of claim 1 or claim 2, wherein dispersing the soy particulates comprises dispersing soy particulates comprising a protein content on the order of 45 to 60 percent and fat content on the order of 3 to 15 percent on a moisture-free basis.

4. The aqueous extraction process of claim 1 or claim 2, wherein dispersing the soy particulates comprises dispersing soy particulates having a particle size on the order of 0.03 to 30 mm.

5. The aqueous extraction process of any preceding claim, wherein dispersing the soy particulates in the liquid comprises dispersing the soy particulates in water of a temperature on the order of 5 to 100°C.

6. The aqueous extraction process of any preceding claim, wherein dispersing the soy particulates in the liquid comprises mixing the soy particulates in the liquid to evenly distribute the soy particulates throughout the dispersion.

7. The aqueous extraction process of any preceding claim, wherein dispersing the soy particulates in the liquid to produce the dispersion comprises distributing an additive in the dispersion to increase the solubility of the soy particulates, the additive comprising sodium bicarbonate.

8. The aqueous extraction process of claim 2, or of any preceding claim, wherein adding the at least one ingredient to the dispersion comprises adding a texture or flavor-modifying ingredient selected from the group consisting of water, a sweetener, a flavor, and a stabilizer.

9. The aqueous extraction process of any preceding claim, further comprising performing a particle size reduction process on the dispersion.

10. The aqueous extraction process of claim 9, wherein performing the particle size reduction process on the dispersion comprises milling the dispersion to produce a soy slurry using shear forces appropriate to disintegrate one or more lumps or particles in the dispersion.

11. The aqueous extraction process of claim 9 or claim 10, wherein performing the particle size reduction process on the dispersion comprises decanting the dispersion to remove particles that are larger than a threshold particle size.

12. The aqueous extraction process of any preceding claim, further comprising injecting a spray of steam into the dispersion to heat the dispersion for the inactivation of one or more microbes that are naturally occurring in the soy particulates.

13. The aqueous extraction process of claim 12, further comprising flash cooling the dispersion, after the injection of the spray of steam, to remove one or more volatile compounds in the dispersion.

14. Soymilk, comprising:
a liquid base comprising water; and
soy particulates having a reduced fat content, the soy particulates distributed in the liquid to produce a dispersion, the dispersion heat-treated for the production of a soymilk having a reduced fat content.

15. The soymilk of claim 14, wherein:
the liquid comprises 84 to 95 percent of the dispersion; and
the soy particulates comprise 5 to 16 percent of the dispersion.

16. The soymilk of claim 14 or claim 15, wherein the soy particulates have a protein content on the order of 45 to 60 percent and fat content on the order of 3 to 15 percent on a moisture-free basis.

17. The soymilk of any one of claims 14 to 16, wherein the soy particulates have an average particle size on the order of 0.03 to 30 mm.

18. The soymilk of any one of claims 14 to 17, wherein the liquid comprises water of a temperature on the order of 5 to 100°C.

19. The soymilk of any one of claims 14 to 18, wherein the soy particulates are distributed substantially evenly in the dispersion through mixing.

20. The soymilk of any one of claims 14 to 19, further comprising sodium bicarbonate, the sodium bicarbonate distributed in the dispersion to increase the solubility of the soy particulates in the liquid.

21. The soymilk of any one of claims 14 to 20, further comprising at least one texture or flavor-modifying ingredient that is selected from the group consisting of water, a sweetener, a flavor, or a stabilizer.

22. A system for the production of soymilk having a reduced fat content, comprising:
a dispersion vessel operable to receive a liquid for the production of a dispersion, the dispersion comprising soy particulates distributed substantially evenly through the liquid, the soy particulates having a reduced fat content;
a mill operable to perform a particle size reduction process on the dispersion using shear forces appropriate to disintegrate one or more lumps or particles in the dispersion; and
a heat treatment vessel coupled to the mill, the heat treatment vessel operable to heat the dispersion to inactivate one or more microbes present in the dispersion.
